# EUROPÄISCHE PATENTSCHRIFT

(11) **EP 2 043 754 B1**
(45) Veröffentlichungstag und Bekanntmachung des Hinweises auf die Patenterteilung: **23.03.2011**
(21) Anmeldenummer: 07787751.2
(22) Anmeldetag: 20.07.2007
(51) Int. Cl.: B01D 35/18, F01M 5/00, F01M 11/03

(54) **FLÜSSIGKEITS-WÄRMETAUSCHER-EINHEIT**
LIQUID HEAT EXCHANGER UNIT
GROUPE ECHANGEUR THERMIQUE POUR LIQUIDE

(30) Priorität: 20.07.2006 DE 202006011339 U
(43) Veröffentlichungstag der Anmeldung: 08.04.2009
(73) Patentinhaber: Mann + Hummel GmbH, 71638 Ludwigsburg (DE)
(72) Erfinder: JAINEK, Herbert, 74074 Heilbronn (DE)
(86) Internationale Anmeldenummer: PCT/EP2007/057496
(87) Internationale Veröffentlichungsnummer: WO 2008/009738

(56) Entgegenhaltungen:
- EP-A- 0 816 645
- EP-A- 1 629 878
- DE-A1- 19 741 449
- DE-U1-202004 011 114

## Beschreibung

Die Erfindung betrifft eine Flüssigkeits-Wärmetauscher-Einheit, insbesondere für Kraftfahrzeuge der im Oberbegriff des Anspruchs 1 angegebenen Gattung.

Aus der DE 197 41 449 A1 ist ein in eine Stützkonsole integrierter Ölfilter bekannt.

Aus der DE 20 2004 011 114 U1 ist ein Ölmodul mit einem Ölfilter, einem Wärmetauscher und einer Wasserpumpe bekannt.

Aus der EP 0 816 645 A1 ist ein an ein Kurbelgehäuse anflanschbares Trägerteil mit Aufnahmen für Aggregate der Schmierölversorgung und - behandlung bekannt.

In der DE 102 45 005 A1 ist eine Flüssigkeitsfilter-Wärmetauscher-Einheit beschrieben, die einen Flüssigkeitsfilter und einen Wärmetauscher umfasst, wobei der Flüssigkeitsfilter in einem Filtergehäuse ein Filterelement aufweist. Dabei ist das Filtergehäuse als Anschlusselement ausgestaltet, das einerseits mit einer Flanschebene an ein Bauteil mit den Anschlussleitungen des Ölkreislaufs und mit einer weiteren Flanschebene mit einem Wärmetauscher verbindbar ist. Auf diese Weise werden die gesamten ölführenden Anschlüsse in einem Bauelement zusammengefasst, wodurch die Anzahl der Verbindungsstellen und notwendigen Dichtungen auf ein Minimum reduziert werden.

Der vorliegenden Erfindung liegt die Aufgabe zugrunde, eine Flüssigkeits-Wärmetauscher-Einheit der gattungsgemäßen Art im Hinblick auf eine Beaufschlagung des Wärmetauschers mit einer Kühlflüssigkeit weiter zu optimieren.

Diese Aufgabe wird mit einer Flüssigkeits-Wärmetauscher-Einheit mit den Merkmalen des Anspruchs 1 gelöst.

Durch die bauliche Vereinigung der Kühlmittelleitung mit dem Anschlusselement und der Integration von Kühlmittelzulauf und Kühlmittelrücklauf im Bereich der zweiten Flanschebene ist eine weitere Integration von flüssigkeitsführenden Leitungen erreicht, wobei mit dem Anbau des Wärmetauschers an dem Anschlusselement alle den Wärmetauscher betreffenden flüssigkeitsführenden Leitungen gleichzeitig angeschlossen bzw. abgedichtet werden.

Erfindungsgemäß werden das Anschlusselement und die Kühlmittelleitung als separate Bauteile hergestellt und die Kühlmittelleitung an dem Anschlusselement montiert. Auf diese Weise ist es möglich, bei einem standardisierten Anschlusselement verschiedene Kühlmittelleitungen anzubringen, die jeweils auf den speziellen Einsatzfall ausgelegt und in Abhängigkeit des verfügbaren Bauraums oder weiterer Parameter gestaltet sind. Erfindungsgemäß besteht die Kühlmittelleitung aus einem Rohr, das zwei in das Anschlusselement ragende Anschlussstutzen umfasst. Ein derartiges Rohr ist auf einfache Weise in beliebigen Formen herstellbar, wobei die Anschlussstutzen integraler Bestandteil sind und somit unmittelbar in entsprechenden Öffnungen des Anschlusselementes aufnehmbar sind.

Je nach erforderlicher Wärmetauschleistung und Druckabfall im Wärmetauscher bzw. im Ölkühler ist es nicht erforderlich, dass der gesamte Kühlmittelstrom durch den Wärmetauscher geleitet wird. Es ist daher erfindungsgemäß in der Kühlmittelleitung zwischen dem Kühlmittelzulauf und dem Kühlmittelrücklauf eine Drossel vorgesehen durch die eine Bypassströmung des Kühlmittels durch den Ölkühler erzeugt wird. Dabei wird es als besonders zweckmäßig angesehen, dass die Drossel durch eine Einschnürung der Kühlmittelleitung gebildet ist, so dass eine Drosselöffnung einen gegenüber dem Rohrdurchmesser wesentlich geringeren Durchmesser aufweist. Auf diese Weise ist kein zusätzliches Bauteil erforderlich, sondern die Drosselöffnung wird durch die Kontur der Rohrwandung gebildet.

Die Anschlussstutzen an der Kühlmittelleitung sind vorzugsweise mit umlaufenden Nuten versehen, in denen Dichtungsringe aufgenommen sind, so dass die Anschlussstutzen durch Einstecken in Bohrungen oder Aufnahmeöffnungen des Anschlusselementes gleichzeitig abgedichtet sind. Zur Befestigung der Kühlmittelleitung an dem Anschlusselement sind an der Kühlmittelleitung seitliche Vorsprünge vorgesehen und durch Öffnungen in den Vorsprüngen sind Befestigungsschrauben in Gewindebohrungen des Anschlusselementes gedreht.

Um die Kühlmittelleitung möglichst weit in den Bauraum zu integrieren, den das Anschlusselement nach den erforderlichen Gegebenheiten benötigt, ist es von Vorteil, dass die erste Flanschebene am Anschlusselement zwei Flanschbereiche umfasst, zwischen denen eine Aussparung gebildet ist, die zur Aufnahme eines Abschnitts der Kühlmittelleitung dient. Da das Anschlusselement und die Kühlmittelleitung ursprünglich als separate Teile gefertigt und erst später baulich miteinander vereinigt sind, sind unterschiedliche Materialkombinationen möglich, wobei es als vorteilhaft angesehen wird, dass das Anschlusselement mit dem Filtergehäuse einstückig aus einer Leichtmetalllegierung hergestellt ist und die Kühlmittelleitung aus einem Kunststoffrohr besteht. Je nach Anforderungen an den Einbauraum oder andere Gegebenheiten im Fahrzeug können die erste und zweite Flanschebene parallel zueinander verlaufen, es ist jedoch auch möglich, dass die erste Flanschebene und die zweite Flanschebene in einem Winkel zueinander verlaufen.

Ausführungsbeispiele der erfindungsgemäßen Flüssigkeitsfilter-Wärmetauscher-Einheit sind nachstehend anhand der Zeichnung näher erläutert. In der Zeichnung zeigt

Fig. 1 eine perspektivische Darstellung einer Flüssigkeits-Wärmetauscher-Einheit,

Fig. 2 einen Schnitt entlang der Linie II-II in Fig. 1,

Fig. 3 eine Darstellung des Schnittes durch einen Kältemittelzulauf zum Ölkühler,

Fig. 4 eine Ausführungsvariante zu Fig. 3,

Fig. 5 eine Ausführungsvariante eines Anschlusselementes mit angeformtem Filtergehäuse,

Fig. 6 eine Ansicht in Richtung auf die erste Flanschebene des Anschlusselementes gemäß Fig. 5 mit angebauter Kühlmittelleitung,

Fig. 7 eine Ansicht in Richtung auf die zweite Flanschebene des Anschlusselementes gemäß Fig. 5.

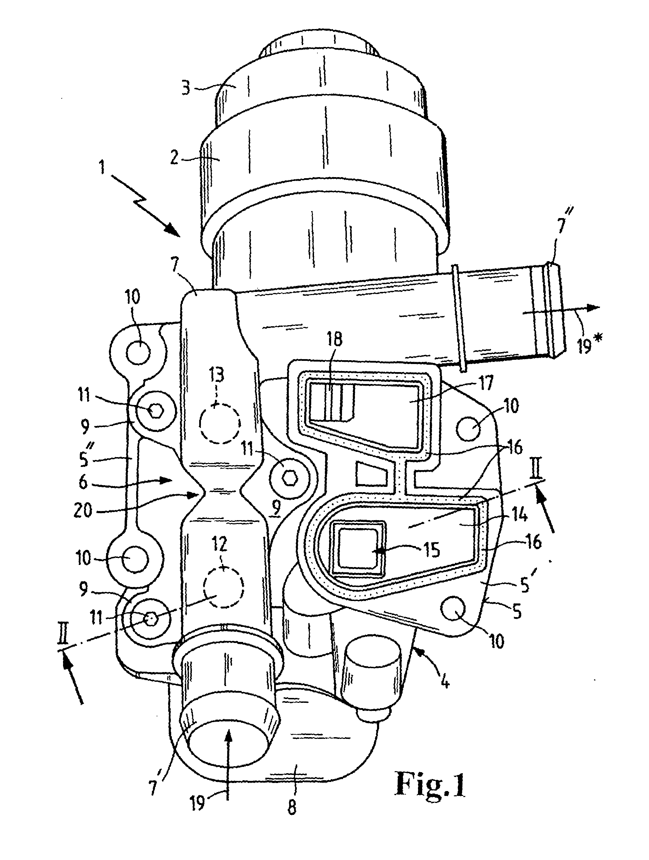

In Fig. 1 ist eine Flüssigkeitsfilter-Wärmetauscher-Einheit 1 dargestellt, die ein Anschlusselement 4 mit einem Filtergehäuse 2 und als Wärmetauscher einen Ölkühler 8 umfasst. Das Filtergehäuse 2 ist durch einen Gehäusedeckel 3 verschlossen. Das Anschlusselement 4 weist eine erste Flanschebene 5 mit Flanschbereichen 5' und 5" auf, wobei die Flanschebene 5 zum Anbau an einen Motorblock einer Brennkraftmaschine dient. Zur Befestigung des vorzugsweise metallischen Anschlusselementes 4 an den Motorblock sind insgesamt vier Bohrungen 10 vorgesehen, jeweils zwei in jedem der Flanschbereiche 5' und 5", durch die Befestigungsschrauben oder Stehbolzen geführt werden, so dass das Anschlusselement gegen eine entsprechende Anlagefläche des Motorblocks spannbar ist. Auf der, der ersten Flanschebene 5, entgegengesetzten Seite des Anschlusselementes 4 befindet sich der Ölkühler 8.

Zwischen den Flanschbereichen 5' und 5" ist eine Aussparung 6 vorgesehen, in der eine Kühlmittelleitung 7 für das Kühlmittel der Brennkraftmaschine angeordnet ist. Die Kühlmittelleitung 7 besteht vorzugsweise aus einem Kunststoffrohr und besitzt ein Eintrittsende 7' und ein Austrittsende 7", an die jeweils ein Kühlmittelschlauch angeschlossen wird. Mit den Pfeilen 19 und 19* ist jeweils die Strömungsrichtung des Kühlmittels angegeben. Im Ausführungsbeispiel ist die Längserstreckung der Kühlmittelleitung im wesentlichen L-förmig, wobei der in der Aussparung 6 verlaufende Schenkel der L-Form drei seitliche Vorsprünge 9 besitzt, in denen Öffnungen zur Aufnahme von Befestigungsschrauben 11 vorgesehen sind, mittels welcher die Kühlmittelleitung 7 an dem Anschlusselement 4 befestigt ist.

Die Kühlmittelleitung 7 ist mit einem Kühlmittelzulauf 12 zum Ölkühler 8 und einem Kühlmittelrücklauf 13 von diesem versehen. Zwischen dem Kühlmittelzulauf 12 und Kühlmittelrücklauf 13 weist die Kühlmittelleitung 7 eine Einschnürung 20 auf, durch die eine wesentliche Querschnittsverringerung an dieser Stelle erzeugt ist, die als Drossel wirkt und auf diese Weise mit einem Teilstrom des Kühlmittels für eine Zwangsdurchströmung des Ölkühlers 8 sorgt.

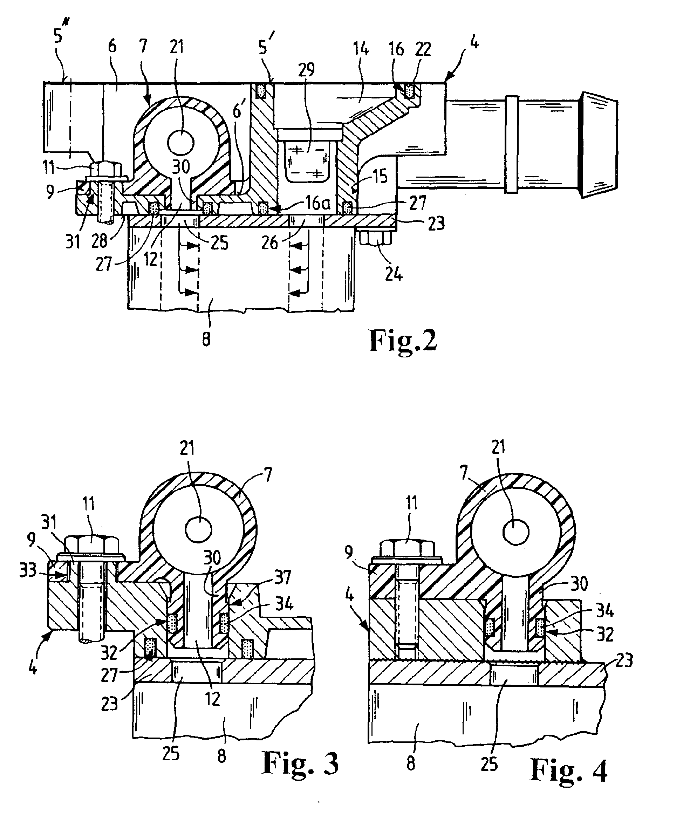

Im Flanschbereich 5' befinden sich ein Zulaufanschluss 14 und ein Rücklaufanschluss 17 für das Motoröl, wobei im Zulaufanschluss 14 eine Zulaufbohrung 15 angeordnet ist, die mit dem Ölkühler 8 in Verbindung steht, wie dies später noch zu Fig. 2 erläutert wird. Im Rücklaufanschluss 17 ist eine Rücklaufbohrung 18 angeordnet, die mit der Reinseite des Filters, das ist im vorliegenden Fall der zylindrische Innenraum eines hohlzylindrischen Filterelementes, in Verbindung steht. Der Zulaufanschluss 14 und der Rücklaufanschluss 17 sind jeweils von einer Nut 16 zur Aufnahme einer Dichtung, beispielsweise in Form eines O-Ringes, umgeben, wobei im am Motorblock montierten Zustand des Anschlusselementes 4 die Dichtungen gegen eine Anlagefläche am Motorblock gedrückt werden.

Die Fig. 2 zeigt einen Schnitt entlang der Linie II-II in Fig. 1. Daraus ist ersichtlich, dass entgegengesetzt zur ersten Flanschebene 5 am Anschlusselement 4 eine zweite Flanschebene 28 ausgebildet ist, die zum Anschluss des Ölkühlers 8 dient. Der Ölkühler 8 besitzt einen Flansch 23, mit dem er an der zweiten Flanschebene 28 liegt, und ist mittels Befestigungsschrauben 24 am Anschlusselement 4 festgelegt. Neben dem Rand des Zulaufanschlusses 14 verläuft die Nut 16, in der der Dichtungsring 22 angeordnet ist. In den Zulaufanschluss 14 mündet die Zulaufbohrung 15, die zur zweiten Flanschebene 28 hin verläuft und dort mit einer Eintrittsöffnung 26 für das Öl in Verbindung steht. In einer die Zulaufbohrung 15 umgebende Nut ist ein Dichtungsring 27 angeordnet. In der Zulaufbohrung 15 ist ein Rückschlagventil 29 zur Vermeidung eines Rückfließens des zu kühlenden und zu reinigenden Öls vorgesehen.

Aus Fig. 2 ist auch die Form der Aussparung 6 zwischen den Flanschbereichen 5' und 5" ersichtlich, an deren Boden 6' die Kühlmittelleitung 7 aufliegt und ein an diesem angeformten Anschlussstutzen 30 in eine entsprechende Öffnung im Boden 6' ragt. Der Anschlussstutzen 30 bildet den Kühlmittelzulauf 12, der mit einer Eintrittsöffnung 25 für das Kühlmittel am Ölkühler 8 in Verbindung steht. Um den Rand der den Anschlussstutzen 30 aufnehmenden Öffnung ist ebenfalls ein Dichtring 27 gelegt, um den Austritt von Kühlmittel zu verhindern. Der seitliche Vorsprung 9 an der Kühlmittelleitung 7 ist auf einen Zapfen 31 am Anschlusselement 4 gesteckt und mit der Befestigungsschraube 9 gesichert. Außerdem ist in Fig. 2 eine Drosselöffnung 21 ersichtlich, die durch die in Fig. 1 dargestellte Einschnürung 20 der Kühlmittelleitung 7 gebildet ist.

In Fig. 3 ist der Längsschnitt durch den Kühlmittelzulauf 12 bzw. der Anschlussstutzen 30 der Kühlmittelleitung 7 etwas geändert gegenüber der Fig. 2 dargestellt. Dabei ist der Anschlussstutzen 30 mit einer umlaufenden Nut 32 versehen, in der ein Dichtungsring 34 angeordnet ist. Der Anschlussstutzen 30 befindet sich in einer Bohrung 37 im Anschlusselement 4, wobei der Dichtungsring 34 an der Bohrungswandung anliegt. Der seitliche Vorsprung 9 besitzt eine Öffnung 33, durch die sich der Zapfen 31 erstreckt, wobei letzterer etwa bündig mit der Oberkante des Vorsprungs 9 ist, so dass die von der Befestigungsschraube erzeugte Spannkraft im wesentlichen von dem Material des Zapfens 31 aufgenommen wird. Im Übrigen stimmen für gleiche Teile die Bezugszeichen mit denjenigen der Fig. 2 überein.

Die Fig. 4 zeigt eine Ausführungsvariante zu Fig. 3, deren Unterschiede darin bestehen, dass das Anschlusselement 4 mit dem Flansch 23 des Ölkühlers 8 stoffschlüssig verbunden ist, wodurch auf eine Dichtung verzichtet wird, und dass eine ebene Fläche ohne Zapfen zur Anlage des seitlichen Vorsprungs 9 vorgesehen ist.

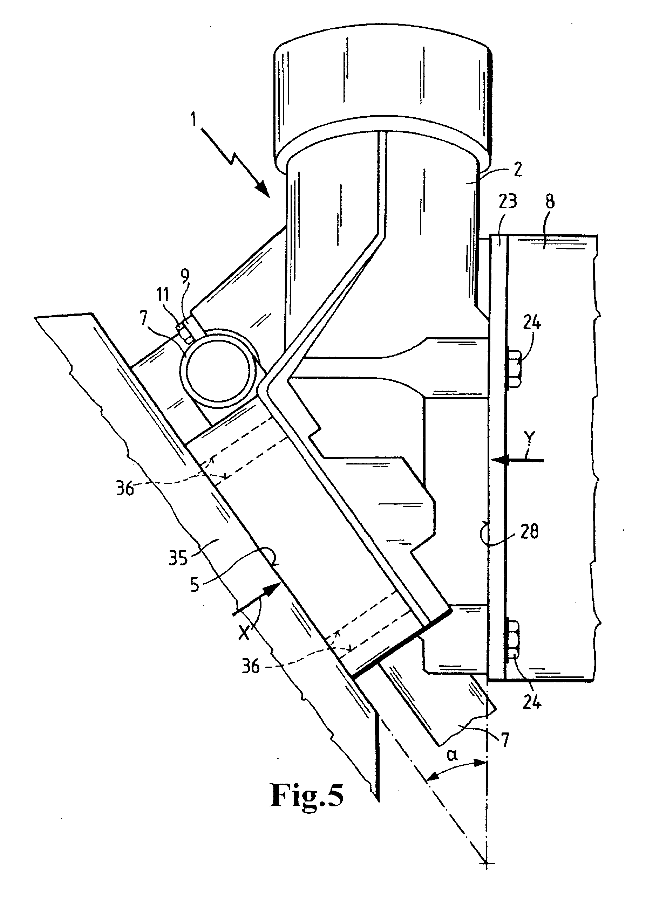

Die Fig. 5 zeigt eine Ausführungsvariante des Anschlusselementes 4, das einstückig mit dem Filtergehäuse 2 ausgeführt ist und vorzugsweise aus einer Leichtmetalllegierung besteht. Die erste Flanschebene 5 und die zweite Flanschebene 28 verlaufen in einem Winkel α zueinander, der im Ausführungsbeispiel ca. 35° beträgt. Mit der Flanschebene 5 an einem Motorblock 35 anliegend ist das Anschlusselement 4 an diesem angebaut, wobei die Achsen der nicht dargestellten Befestigungsmittel mit dem Bezugszeichen 36 bezeichnet sind. Die Kühlmittelleitung 7 ist als abgewinkeltes Rohr ausgeführt und mittels Schraube 11, die durch den seitlichen Vorsprung 9 geführt ist, am Anschlusselement 4 befestigt. Der Ölkühler 8 liegt mit seinem Flansch 23 an der zweiten Flanschebene 28 und ist mittels Befestigungsschrauben 24 dort festgelegt.

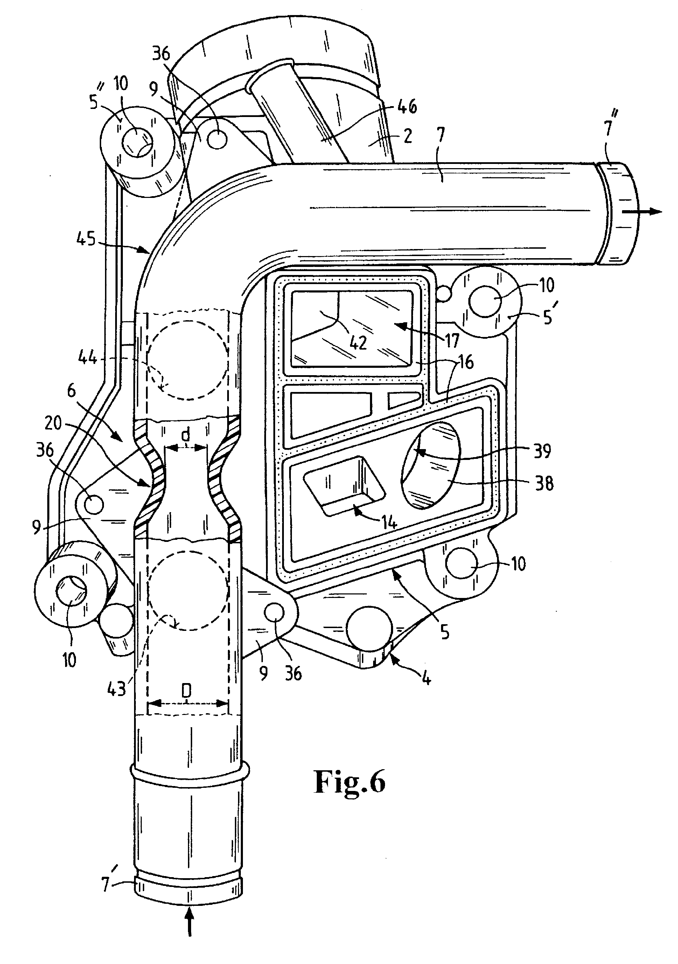

Fig. 6 zeigt eine Ansicht in Richtung auf die erste Flanschebene 5 des Anschlusselementes 4 gemäß Fig. 5. Zwischen den Flanschbereichen 5' und 5" befindet sich die Aussparung 6. Seitlich der Aussparung 6 sind drei Gewindebohrungen zur Aufnahme der in Fig. 1 gezeigten Befestigungsschrauben 11 vorgesehen, die deckungsgleich mit Öffnungen 36 der Vorsprünge 9 sind. Mit den Befestigungsschrauben 11 wird der Kühlmittelkanal 7 befestigt.

Im Flanschbereich 5' ist der Zulaufanschluss 14 ausgebildet, der zu der zweiten Flanschebene führt, an der der in Fig. 5 gezeigte Ölkühler 8 mit einer entsprechenden Eingangsöffnung für das Öl angeschlossen ist. Neben dem Zulaufanschluss 14 ist eine Öffnung 38 angeordnet, von der ein Bypasskanal 39 zur Rohseite des Filterelementes im Filtergehäuse 2 führt. Dieser Bypasskanal 39 ist mit einem Ventilmittel versehen, so dass der Bypasskanal 39 bei bestimmten Betriebsbedingungen geöffnet bzw. geschlossen wird. Solche Betriebsbedingungen können beispielsweise die Temperatur des Öls oder das Überschreiten eines vorgegebenen Druckniveaus im Zulaufkanal 14 sein. Ferner befindet sich im Flanschbereich 5' der Rücklaufanschluss 17, der über einen Verbindungskanal mit der Reinseite des Filterelementes verbunden ist. Die Öffnung 38 und der Anschluss 14 sind von einer gemeinsamen Nut 16 zur Aufnahme einer Dichtung umgeben, eine weitere Nut 16 umgibt den Rücklaufanschluss 17.

Wie sich aus dieser Darstellung des Anschlusselementes 4 ergibt, ist die Kühlmittelleitung 7 eingesetzt. Auf der dem Boden der Aussparung 6 zugewandten Seite besitzt die Kühlmittelleitung 7 zwei Anschlussstutzen 43 und 44, die in Aufnahmeöffnungen eingesteckt und gegen diese abgedichtet sind. Die Kühlmittelleitung 7 besitzt im Wesentlichen eine L-förmige Erstreckung, wobei ein erster Schenkel von dem Eintrittsende 7' bis zu einem Bogen 45 reicht, von dem aus sich in einem Winkel von ca. 90° ein zweiter Schenkel bis zu dem Austrittsende 7" erstreckt. Je nach Einbaubedingungen am Motor bzw. den Nebenaggregaten sind beliebige Führungen der Kühlmittelleitung 7 möglich, wobei die geänderte Form ohne Auswirkung auf die Gestaltung des Anschlusselementes 4 bleiben kann.

Zwischen den am ersten Schenkel angeordneten Anschlussstutzen 43, 44 befindet sich die Einschnürung 20, wodurch der Innendurchmesser D der Kühlmittelleitung an dieser Stelle auf einen Durchmesser d reduziert wird, so dass sich eine erhebliche Drosselwirkung des Kühlmittelstromes ergibt. Dadurch wird ein Teilstrom vom Anschlussstutzen 43 durch den Ölkühler und zurück zum Anschlussstutzen 44 geführt. Zwischen dem Bogen 45 und dem Austrittsende 7" ist ein Anschlussstutzen 46 zum Anschluss einer weiteren Kühlmittelleitung vorgesehen. Im Übrigen stimmen die Bezugszeichen für gleiche Teile mit denjenigen der zuvor beschriebenen Fig. überein.

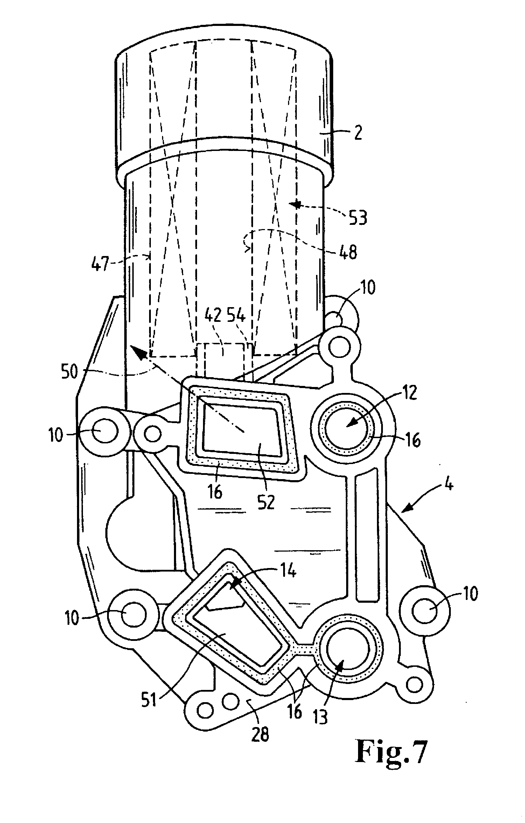

Die Fig. 7 zeigt eine Ansicht des Anschlusselementes 4 gem. Fig. 5 in Richtung auf die zweite Flanschebene 28. An dieser Flanschebene münden der Kühlmittelzulauf 12, der Kühlmittelrücklauf 13, ein vom Zulaufanschluss 14 kommender Kanal 51 sowie ein Verbindungskanal 52 zur Rohseite 47, wobei mit einem Pfeil 50 die Strömungsrichtung zur Rohseite 47 eines Filterelementes 53 angegeben ist. Das Filterelement 53 ist auf einen hohlen Stutzen 54 gesteckt, in dem ein an den Rücklaufanschluss 17 angeschlossener Verbindungskanal 42 beginnt, so dass durch diesen das gereinigte Öl von der Reinseite 48 des Filterelementes 53 zu dem in Fig. 6 gezeigten Rücklaufanschluss 17 geführt wird.

## Patentansprüche

1. Flüssigkeitsfilter-Wärmtauscher-Einheit (1), insbesondere für Kraftfahrzeuge, welche ein Filtergehäuse (2) mit einem darin befindlichen Flüssigkeitsfilter (53) und ein Anschlusselement (4) umfasst, wobei das Anschlusselement (4) eine erste Flanschebene (5) zum Anschluss an eine Brennkraftmaschine und eine zweite Flanschebene (28) zum Anschluss eines Wärmetauschers, vorzugsweise eines Ölkühlers (8) aufweist, **dadurch gekennzeichnet, dass** an dem Anschlusselement eine Kühlmittelleitung (7) mit einem Kühlmitfielzulauf (12) und einem Kühlmittelrücklauf (13) vorgesehen ist, wobei der Kühlmittelzulauf (12) und der Kühlmittelrücklauf (13) zur zweiten Flanschebene (28) geführt sind, wobei das Anschlusselement (4) und die Kühlmittelleitung (7) als separate Bauteile hergestellt und die Kühlmittelleitung an dem Anschlusselement (4) montiert ist, wobei die Kühlmittelleitung (7) aus einem Rohr besteht, das zwei in das Anschlusselement (4) ragende Anschlussstutzen (30; 43, 44) umfasst, wobei in der Kühlmittelleitung (7) zwischen dem Kühlmitfielzulauf (12) und dem Kühlmittelrücklauf (13) eine Drossel vorgesehen ist, durch die eine Bypassströmung des Kühlmittels durch den Ölkühler (8) erzeugt wird.

2. Flüssigkeitsfilter-Wärmetauscher-Einheit nach Anspruch 1, **dadurch gekennzeichnet, dass** die Drossel durch eine Einschnürung (20) in der Kühlmittelleitung (7) gebildet ist, so dass eine Drosselöffnung (21) einen gegenüber dem Rohrdurchmesser (D) wesentlich geringeren Durchmesser (d) aufweist.

3. Flüssigkeitsfilter-Wärmetauscher-Einheit nach einem der vorhergehenden Ansprüche, **dadurch gekennzeichnet, dass** die Anschlussstutzen (30; 43, 44) in Bohrungen (37) von Aufnahmeöffnungen des Anschlusselementes (4) eingesteckt und mittels Dichtungsringen (34) abgedichtet sind.

4. Flüssigkeitsfilter-Wärmetauscher-Einheit nach einem der vorhergehenden Ansprüche, **dadurch** gekenntzeichnet, dass die Kühlmittelleitung (7) seitliche Vorsprünge (9) aufweist, die gemeinsam mit Befestigungsschrauben (11) zur Festlegung am Anschlusselement (4) dienen.

5. Flüssigkeitsfilter-Wärmetauscher-Einheit nach einem der vorhergehenden Ansprüche, **dadurch gekennzeichnet, dass** die erste Flanschebene (5) am Anschlusselement (4) zwei Flanschbereiche (5', 5") umfasst, zwischen denen eine Aussparung (6) gebildet ist, die zur Aufnahme eines Abschnitts der Kühlmittelleitung (7) dient.

6. Flüssigkeitsfilter-Wärmetauscher-Einheit nach einem der vorhergehenden Ansprüche, **dadurch gekennzeichnet, dass** das Anschlusselement (4) mit dem Filtergehäuse (2) einstückig aus einer Leichtmetaillegierung hergestellt ist und die Kühlmittelleitung (7) aus einem Kunststoffrohr besteht.

7. Flüssigkeitsfilter-Wärmetauscher-Einheit nach einem der vorhergehenden Ansprüche, **dadurch gekennzeichnet, dass** die erste Flanschebene (5) und die zweite Flanschebene (28) in einem Winkel (α) zueinander verlaufen, wobei vorzugsweise der Winkel (α) etwa im Bereich von 35° liegt.

## Claims

1. Liquid filter heat exchanger unit (1), in particular for motor vehicles, which comprises a filter housing (2) with a liquid filter (53) and a connection element (4) located therein, the connection element (4) featuring a first flange plane (5) for connection with an internal combustion engine and a second flange plane (28) for connection of a heat exchanger, preferably an oil cooler (8), **characterized in that** a coolant pipe (7) with a coolant inlet (12) and a coolant return (13) is provided at the connection element, the coolant inlet (12) and the coolant return (13) leading to the second flange plane (28), the connection element (4) and the coolant pipe (7) being manufactured as separate components and the cooling pipe being mounted to the connection element (4), the coolant pipe (7) being made of a pipe that comprises two connecting branches (30; 43, 44) protruding into the connection element (4), a throttle by means of which a bypass of the coolant flowing through the oil cooler (8) is generated being provided in the cooling pipe (7) between the coolant inlet (12) and the coolant return (13).

2. Liquid filter-heat exchanger unit according to claim 1, **characterized in that** the throttle is formed by means of a constriction (20) in the coolant pipe (7) so that a throttle opening (21) features a substantially smaller diameter (d) than the pipe diameter (D).

3. Liquid filter-heat exchanger unit according to one of the above claims, **characterized in that** the connecting branches (30; 43, 44) are inserted into boreholes (37) of receiving openings of the connection element (4) and sealed by means of sealing rings (34).

4. Liquid filter-heat exchanger unit according to one of the above claims, **characterized in that** the coolant pipe (7) features lateral protrusions (9) which serve, together with fixing screws (11), to fix it at the connection element (4).

5. Liquid filter-heat exchanger unit according to one of the above claims, **characterized in that** the first flange plane (5) comprises two flange portions (5', 5") at the connection element (4) between which a recess (6) is formed which serves to receive a section of the coolant pipe (7).

6. Liquid filter-heat exchanger unit according to one of the above claims, **characterized in that** the connection element (4) is made of a light-metal alloy as one-piece with the filter housing (2) and that the coolant pipe (7) is made of a plastic pipe.

7. Liquid filter-heat exchanger unit according to one of the above claims, **characterized in that** the first flange plane (5) and the second flange plane (28) extend at an angle (α) relative to each other, the angle (α) being formed preferably in a range of 35°.

## Revendications

1. Unité d'échangeur thermique à filtre à liquide (1), notamment pour des véhicules automobiles, comprenant un boîtier de filtre (2) avec un filtre à liquide (53) placé à l'intérieur et un élément de raccord (4), l'élément de raccord (4) présentant un premier plan de bridage (5) destiné au raccordement d'un moteur à combustion interne et un deuxième plan de bridage (28) destiné au raccordement d'un échangeur thermique, de préférence d'un refroidisseur d'huile (8), **caractérisée en ce qu'**une conduite d'agent réfrigérant (7) avec une arrivée d'agent réfrigérant (12) et un retour d'agent réfrigérant (13) est prévue sur l'élément de raccord, l'arrivée d'agent réfrigérant (12) et le retour d'agent réfrigérant (13) étant acheminés vers le deuxième plan de bridage (28), l'élément de raccord (4) et la conduite d'agent réfrigérant (7) étant fabriqués en tant que composants séparés et la conduite d'agent réfrigérant étant montée sur l'élément de raccord (4), la conduite d'agent réfrigérant (7) étant constituée d'un tube qui est doté de deux tubulures de raccordement (30 ; 43, 44) entrant dans l'élément de raccord (4), un réducteur qui génère un flux de dérivation de l'agent réfrigérant traversant le refroidisseur d'huile (8) étant prévu dans la conduite d'agent réfrigérant (7) entre l'arrivée d'agent réfrigérant (12) et le retour d'agent réfrigérant (13).

2. Unité d'échangeur thermique à filtre à liquide selon la revendication 1, **caractérisée en ce que** le réducteur est formé par un étranglement (20) dans la conduite d'agent réfrigérant (7) de sorte qu'une ouverture d'étranglement (21) a un diamètre (d) nettement plus petit que le diamètre (D) du tube.

3. Unité d'échangeur thermique à filtre à liquide selon l'une des revendications précédentes, **caractérisée en ce que** les tubulures de raccordement (30 ; 43, 44) sont emboîtées dans des orifices (37) d'ouvertures d'admission de l'élément de raccord (4) et étanchées au moyen de bagues d'étanchéité (34).

4. Unité d'échangeur thermique à filtre à liquide selon l'une des revendications précédentes, **caractérisée en ce que** la conduite d'agent réfrigérant (7) présente des saillies latérales (9) qui servent, avec des vis de fixation (11), à la fixer à l'élément de raccord (4).

5. Unité d'échangeur thermique à filtre à liquide selon l'une des revendications précédentes, **caractérisée en ce que** le premier plan de bridage (5) est doté de deux zones de bridage (5', 5") sur l'élément de raccord (4) entre lesquelles est ménagé un évidement (6) qui sert à loger une section de la conduite d'agent réfrigérant (7).

6. Unité d'échangeur thermique à filtre à liquide selon l'une des revendications précédentes, **caractérisée en ce que** l'élément de raccord (4) est réalisé dans un alliage léger, sous forme de monobloc avec le boîtier de filtre (2), et que la conduite d'agent réfrigérant (7) est constituée d'un tube en matière plastique.

7. Unité d'échangeur thermique à filtre à liquide selon l'une des revendications précédentes, **caractérisée en ce que** le premier plan de bridage (5) et le deuxième plan de bridage (28) sont positionnés l'un par rapport à l'autre dans un angle (α), l'angle (α) étant de préférence de l'ordre de 35°.
